# EUROPÄISCHE PATENTSCHRIFT

(11) **EP 1 183 476 B1**
(45) Veröffentlichungstag und Bekanntmachung des Hinweises auf die Patenterteilung: **28.07.2004**
(21) Anmeldenummer: 00929565.0
(22) Anmeldetag: 30.05.2000
(51) Int. Cl.: F16C 17/04

(54) **AXIALLAGERELEMENT**
THRUST BEARING ELEMENT
ELEMENT DE PALIER DE BUTEE

(30) Priorität: 08.06.1999 US 327377
(43) Veröffentlichungstag der Anmeldung: 06.03.2002
(73) Patentinhaber: KS Gleitlager GmbH, 68789 St. Leon-Rot (DE)
(72) Erfinder: BYARD, Clifford, Westport, IN 47283 (US)
(74) Vertreter: Friz, Oliver
(86) Internationale Anmeldenummer: PCT/EP2000/004907
(87) Internationale Veröffentlichungsnummer: WO 2000/075521

(56) Entgegenhaltungen:
- DE-A- 1 957 058
- GB-A- 2 200 412
- US-A- 2 930 661
- US-A- 4 726 695
- US-A- 5 264 748
- US-A- 5 363 557

## Beschreibung

Die Erfindung betrifft ein halbkreisförmiges oder kreisförmiges Axiallagerelement, insbesondere Anlaufscheibe oder Bundlagerschale oder Bundlagerbuchse, mit Vertiefungen auf der dem Gleitpartner zugewandten Seite zur Bildung von radialen Ölaustrittsöffnungen, wobei zwischen zwei Vertiefungen angeordnete Erhöhungen verrundet ausgebildet sind und wobei die Profilierung eine Tiefe zwischen Erhöhungen und Vertiefungen von 0,05 bis 0,2 mm aufweist.

Ein derartiges Axiallagerelement ist aus DE 1 957 058 A bekannt. Die Übergänge zwischen keilförmig ausgebildeten Erhebungen sind unstetig. US 5 363 557 A zeigt ein ähnliches Axiallagerelement mit bis zu zehn Erhebungen, die verrundet ausgebildet sind. Zwischen ihnen befinden sich unstetige Übergänge.

Maschinen und Getriebe verfügen über Pumpen, welche einen kontinuierlichen Fluß von Schmiermittel zu den Lagern aufrechterhalten. Bei Lagern handelt es sich üblicherweise um Hülsen, Buchsen oder Schalen, deren innerer Durchmesser geringfügig größer ist als derjenige der zu lagernden Welle. Unter Druck stehendes Schmiermittel, in der Regel Schmieröl, wird in den Zwischenraum zwischen der zu lagernden Welle und dem Lagerelement gepreßt. Die Welle wird hierdurch "angehoben" und schwimmt auf dem Schmiermittelfilm (hydrodynamische Schmierung). Hierdurch werden eine geringere Reibung, geringere Temperaturen und eine höhere Umdrehungsgeschwindigkeit der Welle erreicht als dies unter Verwendung von schmiermittelbefüllten Kugellagern der Fall ist.

Die Welle kann sich daher in axialer Richtung, also in Richtung auf ihre Enden bewegen. Die Bewegung wird durch Axiallagerelemente der hier in Rede stehenden Art begrenzt. Wenn die Welle sich aus ihrer bestimmungsgemäßen Position entfernt, so wird diese axiale Bewegung durch Axiallagerelemente gestoppt.

Man ist stets bestrebt, die Motorkomponenten und darunter auch Axiallagerelemente so klein wie möglich zu halten, um Motor- und Getriebekosten gering zu halten. Axiallagerelemente mit hoher Belastbarkeit und geringer Größe sind daher wünschenswert.

Laborversuche haben gezeigt, daß viele der bekannten Konstruktionen von Axiallagerelementen und deren Schmierung bei Motoranwendungen ineffektiv sind. Sie erhöhen die Belastbarkeit des Lagers (load carrying capacity) kaum.

Bei einem weiteren bekannten Axiallagerelement (thrust bearing) zur Begrenzung der axialen Bewegung der Kurbelwelle von Verbrennungsmotoren sind auf der dem Gleitpartner zugewandten Seite Vertiefungen zur Bildung von radialen Ölaustrittsöffnungen vorgesehen, deren Tiefe mit 0,3 bis 0,65 mm sehr tief bemessen ist. Über eine Erstreckung von 180° sind drei derartige Vertiefungen vorgesehen, über welche das Schmiermittel in radialer Richtung aus der Axiallagerstelle austreten kann.

Angesichts der großen Tiefe der Vertiefungen müssen die Axiallagerelemente sehr dick bemessen werden, was zwar die Herstellungskosten, nicht jedoch die Belastbarkeit erhöht.

Hiervon ausgehend liegt der vorliegenden Erfindung die Aufgabe zugrunde, die Belastbarkeit von Axiallagerelementen der eingangs beschriebenen Art zu erhöhen, ohne daß dies mit einer Zunahme von Bauraum verbunden ist. Auch sollen die Herstellungskosten gegenüber bekannten Axiallagerelementen verringert werden, oder zumindest gleich bleiben.

Die vorstehend erwähnte Aufgabe wird durch ein Axiallagerelement mit den Merkmalen des Anspruchs 1 gelöst.

In Weiterbildung dieses Erfindungsgedankens hat es sich als vorteilhaft erwiesen, wenn die vorstehend genannte Tiefe zwischen 0,05 bis 0,15 mm beträgt.

Des weiteren hat es sich als vorteilhaft erwiesen, wenn über den genannten Winkel von 180° fünf bis sieben Vertiefungen, vorzugsweise 6 Vertiefungen vorgesehen sind.

Wenn vorausgehend von einer verrundeten Ausbildung der zwischen zwei Vertiefungen vorgesehenen Erhöhungen gesprochen wird, so wird hierunter im Unterschied zum Stand der Technik keine flache oder ebene Oberflächenform verstanden. Beim Stand der Technik war derjenige Bereich zwischen zwei Vertiefungen im wesentlichen eben ausgebildet. Es hat sich nun als besonders vorteilhaft erwiesen, wenn die Erhöhungen zwischen zwei Vertiefungen verrundet, hügelförmig oder im Schnitt betrachtet mit gekrümmter Oberflächenkontur ausgebildet werden, da solchenfalls in den Vertiefungen vorgesehenes Schmiermittel, welches nach radial außen austritt, zugleich im Umfangsrichtung in den Bereich zwischen den Erhöhungen und dem Gleitpartner mitgenommen wird.

Es wurde festgestellt, daß durch die Erhöhung der Anzahl der Vertiefungen und durch deren erfindungsgemäße Ausbildung (verrundete Gestalt der Erhöhungen, verhältnismäßig geringe Tiefe) eine Erhöhung der Belastbarkeit des Axiallagerelements von 50 % erreicht werden konnte. Es werden also nach der Erfindung mehr Erhöhungen und Vertiefungen vorgesehen, die jedoch verrundet ausgebildet sind und eine geringere Tiefe aufweisen.

Es konnte aber nicht nur die Belastbarkeit des Axiallagerelements erhöht werden, sondern es konnte auch eine höhere natürliche Frequenz (less fatigue) erreicht werden. Als besonders vorteilhaft wird angesehen, daß die erfindungsgemäßen Lager für beide Umdrehungsrichtungen verwendbar sind.

Auch die Neigung zum Ablösen der Gleitlagerschicht von der Trägerschicht während des Betriebs konnte verringert werden. Wenn die Vertiefungen geprägt werden, was nach der Erfindung bevorzugt wird, so muß hierfür eine geringere Preßkraft verwendet werden, als bei der Herstellung der tieferen Vertiefungen nach dem Stand der Technik.

Weitere Merkmale, Einzelheiten und Vorteile der Erfindung ergeben sich aus den beigefügten Patentansprüchen sowie der zeichnerischen Darstellung und nachfolgenden Beschreibung einer bevorzugten Ausführungsform einer Anlaufscheibe. In der Zeichnung zeigt:
- Figur 1: eine Draufsicht auf die axiale Gleitfläche einer erfindungsgemäßen Anlaufscheibe;
- Figur 2: eine Ansicht der Anlaufscheibe nach Figur 1 gesehen in Richtung des Pfeils "F" in Figur 1;
- Figur 3: eine Schnittansicht der Anlaufscheibe nach Figur 1 in der Schnittebene "G" in Figur 1.

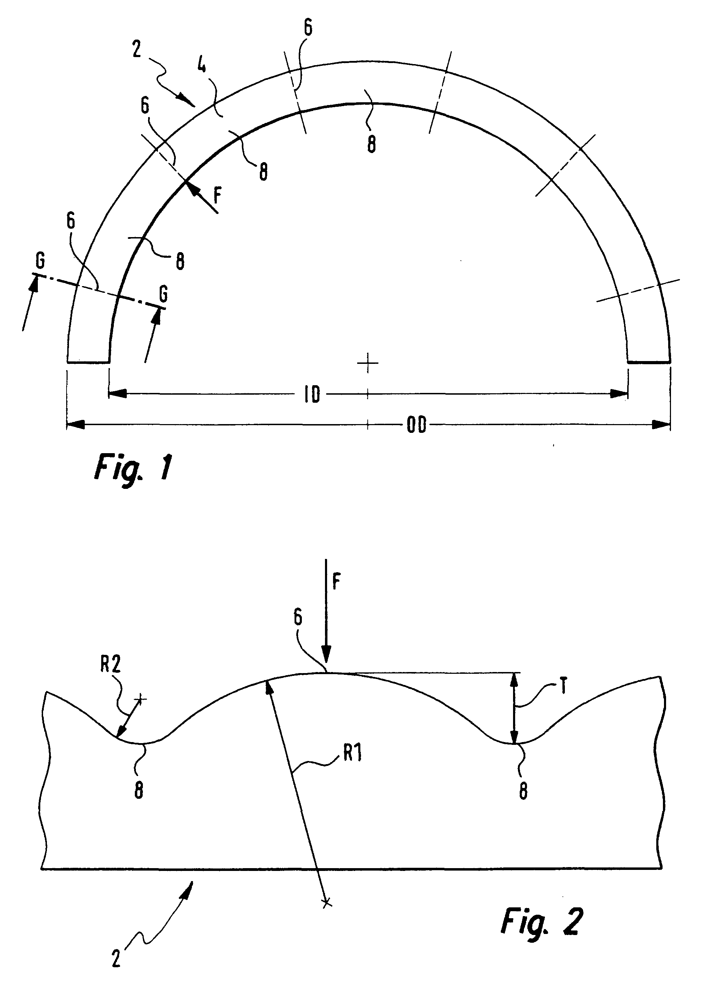

Figur 1 zeigt eine Anlaufscheibe 2 (thrust washer) in Draufsicht auf deren axiale Gleitoberfläche 4, die aus einer Leichtmetallegierung auf Aluminiumbasis mit die tribologischen Eigenschaften verbessernden Zusätzen wie Zinn, Blei, Si u. a. gebildet ist, und auf eine meist aus Stahl bestehende Trägerschicht aufplattiert ist.

Die Anlaufscheibe 2 erstreckt sich über einen Halbkreiswinkel von 180°. Sie umfaßt einen inneren Durchmesser ID von z. B. 120 mm und einen äußeren Durchmesser OD von z. B. 136 mm, der in Figur 1 angedeutet ist.

In Umfangsrichtung sind in einem Winkelabstand von 30° äquidistant zueinander Erhöhungen 6 und dazwischen Vertiefungen 8 vorgesehen, die in der Figur 1 durch radiale unterbrochene Linien angedeutet und in der Ansicht nach Figur 2 dargestellt sind, wobei der in Figur 2 vertikale Maßstab zur Verdeutlichung der Erfindung im Bereich der Erhöhungen und Vertiefungen stark übertrieben dargestellt ist.

In der Darstellung nach Figur 2 erkennt man die verrundete Ausbildung der Erhöhungen 6, die also nicht flach, sondern ergibt sich in Umfangsrichtung ein keilförmiges Volumen zwischen der Anlaufscheibe 2 und einem nicht dargestellten Gleitpartner. Durch die Ausbildung dieses keilförmigen Volumens wird Schmieröl aus den Vertiefungen 8 in Umdrehungsrichtung in Richtung auf die Erhöhungen 6 mitgenommen und hierdurch die Schmierwirkung und damit die Belastbarkeit des Lagers erheblich erhöht.

Im dargestellten bevorzugten Fall beschreiben die Erhöhungen 6 in Umfangsrichtung zumindest abschnittsweise einen Bereich, der einer Kreislinie folgt und einen Krümmungsradius R1 von 1500 mm aufweist. Auch die Vertiefungen 8 beschreiben in Umfangsrichtung zumindest abschnittsweise eine Kreislinie, deren Krümmungsradius R2 7 mm beträgt.

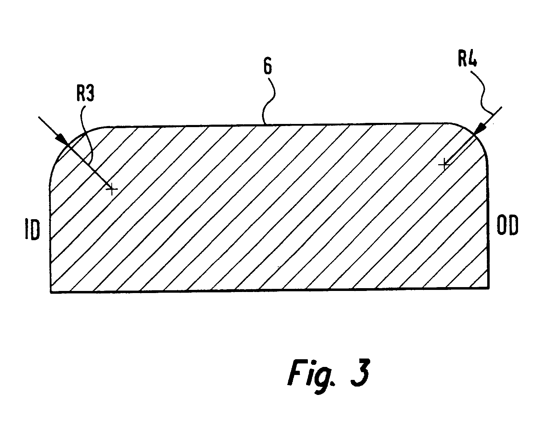

Figur 3 zeigt eine Schnittansicht der Ebene "G" in Figur 1. Der Schnitt verläuft durch eine Erhebung 6 der Anlaufscheibe 2 in radialer Richtung. Man erkennt, daß die Oberfläche der Gleitfläche eine Kurve beschreibt, deren Krümmung an der radial inneren Seite ID der Anlaufscheibe 2 geringer ist als an der radial äußeren Seite OD. Es sind Krümmungsradien R3 radial innen und R4 radial außen in Figur 3 dargestellt.

## Patentansprüche

1. Halbkreisförmiges oder kreisförmiges Axiallagerelement, insbesondere Anlaufscheibe (2) oder Bundlagerschale oder Bundlagerbuchse, mit Vertiefungen (8) auf der dem Gleitpartner zugewandten Seite zur Bildung von radialen Ölaustrittsöffnungen, wobei zwischen zwei Vertiefungen (8) angeordnete Erhöhungen (6) verrundet ausgebildet sind und wobei die Profilierung eine Tiefe (T) zwischen Erhöhungen (6) und Vertiefungen (8) von 0,05 bis 0,2 mm aufweist, **dadurch gekennzeichnet, dass** in Umfangsrichtung über einen Winkel von 180 Grad 5-8 Vertiefungen vorgesehen sind, dass die Erhöhungen (6) und Vertiefungen (8) stetig ineinander übergehen und dass bei Betrachtung einer radialen Schnittebene (G) durch eine Erhöhung (6) die Oberfläche der dem Gleitpartner zugewandten Seite eine Kurve beschreibt, deren Krümmung an der radial inneren Seite (ID) geringer ist als an der radial äußeren Seite (OD).

2. Axiallagerelement nach Anspruch 1, **dadurch gekennzeichnet, daß** die Profilierung eine Tiefe (T) zwischen Erhöhungen (6) und Vertiefungen (8) von 0,05 bis 0,15 mm aufweist.

3. Axiallagerelement nach Anspruch 1 oder 2, **dadurch gekennzeichnet, daß** über einen Winkel von 180 Grad 5-7 Vertiefungen (8) vorgesehen sind.

4. Axiallagerelement nach Anspruch 1, 2 oder 3, **dadurch gekennzeichnet, daß** die Vertiefungen (8) in gleichen Abständen voneinander angeordnet sind.

5. Axiallagerelement nach einem der vorstehenden Ansprüche, **dadurch gekennzeichnet, daß** die Tiefe (T) zwischen Erhöhungen und Vertiefungen zwischen ID/800 und ID/2400 liegt, wobei ID den Innendurchmesser des Axiallagerelements bezeichnet.

## Claims

1. Semicircular or circular thrust bearing element, in particular a thrust washer (2) or flanged bearing shell or flanged bearing bush, comprising recesses (8) on the side facing the sliding partner, in order to form radial oil outlet openings, peaks (6) arranged between two recesses (8) being configured in a rounded manner, and the profile having a depth (T) between peaks (6) and recesses (8) of 0.05 to 0.2 mm, **characterised in that** five to eight recesses are provided in the circumferential direction over an angle of 180°, **in that** the peaks (6) and recesses (8) merge continuously with one another, and that, in view of a radial sectional plane (G) through a peak (6), the surface of the side facing the sliding partner plots a curve, the curvature of which is less on the radial inner side (ID) than on the radial outer side (OD).

2. Thrust bearing element according to claim 1, **characterised in that** the profile has a depth (T) between peaks (6) and recesses (8) of 0.05 mm to 0.15 mm.

3. Thrust bearing element according to either of claims 1 and 2, **characterised in that** five to seven recesses (8) are provided over an angle of 180°.

4. Thrust bearing element according to claim 1, 2 or 3, **characterised in that** the recesses (8) are arranged at equal intervals from one another.

5. Thrust bearing element according to any of the preceding claims, **characterised in that** the depth (T) between peaks and recesses is between ID/800 and ID/2400, ID designating the internal diameter of the thrust bearing element.

## Revendications

1. Elément de palier de butée de forme semi-circulaire ou circulaire, en particulier une rondelle de butée (2), une coquille ou une douille de palier composé axial-radial, avec des creux (8) sur la face en regard du partenaire de frottement pour former des orifices radiaux de sortie d'huile, des surélévations (6) agencées entre deux creux (8) étant formées arrondies et le profilage présentant une profondeur (T) entre surélévations (6) et creux (8) de 0,05 à 0,2 mm, **caractérisé en ce que** dans la direction circonférentielle, 5 à 8 creux sont prévus sur un angle de 180 degrés, **en ce que** les surélévations (6) et les creux (8) s'enchaînent de manière continue et **en ce que** si l'on observe un plan de coupe radial (G) traversant une surélévation (6), la surface de la face en en regard du partenaire de frottement décrit une courbe dont l'incurvation au niveau de la face radialement interne (ID) est inférieure à celle au niveau de la face radialement externe (OD).

2. Elément de palier de butée selon la revendication 1, **caractérisé en ce que** le profilage présente une profondeur (T) entre surélévations (6) et creux (8) de 0,05 à 0,15 mm.

3. Elément de palier de butée selon la revendication 1 ou la revendication 2, **caractérisé en ce que** 5 à 7 creux (8) sont prévus sur un angle de 180 degrés.

4. Elément de palier de butée selon la revendication 1, 2 ou 3, **caractérisé en ce que** les creux (8) sont agencés à équidistance les uns des autres.

5. Elément de palier de butée selon l'une quelconque des revendications précédentes, **caractérisé en ce que** la profondeur (T) entre surélévations et creux est comprise entre ID/800 et ID/2400, ID désignant le diamètre interne de l'élément de palier de butée.
